# EUROPÄISCHE PATENTANMELDUNG

(11) **EP 1 260 410 A1**
(43) Veröffentlichungstag der Anmeldung: **27.11.2002**
(21) Anmeldenummer: 01810493.5
(22) Anmeldetag: 17.05.2001
(51) Int. Cl.: B60Q 1/076

(54) **Stellvorrichtung und Verfahren zur Einstellung eines von einem Scheinwerfer ausgesendeten Lichtbündels**

(71) Anmelder: SAIA-Burgess Murten AG, 3280 Murten (CH)
(72) Erfinder: Specht, Thomas, 1789 Lugnorre (CH); Thiemer, Helmut, 90584 Allersberg (DE)
(74) Vertreter: AMMANN PATENTANWÄLTE AG BERN AMMANN INGENIEURS-CONSEILS EN PROPRIETE INTELLECTUELLE SA BERNE AMMANN PATENT ATTORNEYS LTD BERNE

(57) **Zusammenfassung**

Stellvorrichtung zur gesteuerten Einstellung der Richtung eines Lichtbündels, welches von einem Scheinwerfer eines Fahrzeuges ausgesendet wird, wobei der Scheinwerfer (30) oder eine die Richtung des Lichtbündels beeinflussende Komponente des Scheinwerfers um mindestens zwei Achsen (32, 33) schwenkbar ist. Die Stellvorrichtung umfasst als Komponenten zwei Stellelemente (21, 22) und eine Steuerschaltung (51). Die beiden Stellelemente (21, 22) enthalten je einen beweglichen Schaft (23, 24), der mit dem Scheinwerfer (30) bzw. mit der Komponente des Scheinwerfers mechanisch verbindbar ist. Mit der Steuerschaltung (51) zur Steuerung der beiden Stellelementes (21, 22) sind Steuersignale (54, 55) erzeugbar, die eine gleichzeitige Bewegung der beiden Schäfte (23, 24) bewirken, so dass beide Stellelemente (21, 22) gemeinsam eine Schwenkung des Lichtbündels um eine der beiden Achsen (32, 33) bewirken.

## Beschreibung

Die Erfindung bezieht sich auf eine Stellvorrichtung gemäss Oberbegriff des Anspruchs 1 bzw. 3.

Die Erfindung bezieht sich ferner auf ein Verfahren gemäss Oberbegriff des Anspruchs 9 bzw. 10.

Durch die Beladung eines Fahrzeuges oder durch Nickbewegungen des Fahrzeuges, verursacht z.B. durch Unebenheiten einer Fahrstrasse oder durch Beschleunigungsvorgänge, kann die Richtung des von einem Scheinwerfer ausgestrahlten Lichtbündels so verändert werden, dass z.B. entgegenkommende Fahrer geblendet werden. Um diese Gefahr der Blendung zu verringern, werden Stellvorrichtungen eingesetzt, die es erlauben, z.B. den Reflektor oder den Leuchtweitensteller, entweder von Hand oder durch eine Steuerung entsprechend einzustellen.

Zur Erhöhung der eigenen Fahrsicherheit werden auch Stellvorrichtungen entwickelt, die beim Fahren einer Kurve mittels einer Steuerung eine Schwenkung der Scheinwerfer bewirken, so dass das vom Scheinwerfer erzeugte Lichtbündel entsprechend geschwenkt wird.

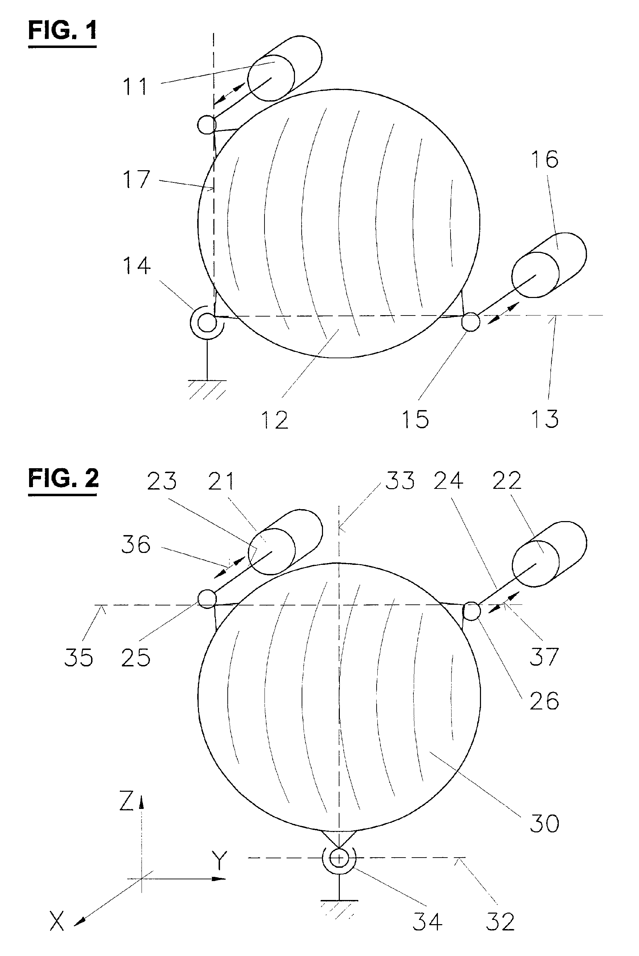

Die Funktionsweise von Stellvorrichtungen soll anhand von Fig. 1 kurz erläutert werden. Wie aus Fig. 1 ersichtlich, wird zum Verstellen eines von einem Scheinwerfer ausgesendeten Lichtbündels ein Stellelement 11 eingesetzt, welches es ermöglicht, z.B. einen Reflektor 12 um eine horizontale Achse 13 zu schwenken. Dabei ist der Reflektor in einem drehbaren Gelenk 14 und an einer Halterung 15 gelagert. Ein weiteres Stellelement 16 kann optional verwendet werden, um eine Schwenkung des Reflektors um eine vertikale Achse 17 zu bewirken.

Ein Nachteil ist, dass die bekannten Stellvorrichtungen für die Schwenkbewegung um die vertikale bzw. horizontale Achse je ein Stellelement umfassen, das jeweils mit einem Antrieb ausgerüstet werden muss, der kräftig genug ist, die auftretenden Reibungs- und Trägheitskräfte zu überwinden. In der Regel bedingt dies, dass die Antriebe und somit die Stellelemente entsprechend gross sind. Grosse Stellelemente sind aber wegen der beschränkten Platzverhältnisse im Einbaubereich der Scheinwerfer nachteilig. Besonders eine Erhöhung der Einbauhöhe aufgrund von grossen Stellelementen wäre nachteilig.

Ausgehend von diesem Stand der Technik liegt der vorliegenden Erfindung zum einen die Aufgabe zu Grunde, eine Stellvorrichtung der eingangs erwähnten Art zur Verfügung zu stellen, die eine kompaktere Bauweise aufweist und die auch bei Verwendung von kleineren Stellelementen eine Schwenkung des Lichtbündels um mindestens zwei Achsen ermöglicht.

Der Erfindung liegt ferner die Aufgabe zu Grunde, ein Verfahren der eingangs erwähnten Art anzugeben, welches eine Vorrichtung mit einer kompakteren Bauweise, insbesondere mit kleineren Stellelemente, einzusetzen gestattet, und welches dennoch eine Schwenkung des Lichtbündels um mindestens zwei Achsen ermöglicht.

Eine erfindungsgemässe Stellvorrichtung, welche die erstgenannte Aufgabe löst, ist im Anspruch 1 angegeben. Eine weitere Stellvorrichtung, welche die erstgenannte Aufgabe löst, ist im Anspruch 3 angegeben. Der Anspruch 2 und die Ansprüche 4 bis 8 und 15 geben bevorzugte Ausführungen an.

Ein erfindungsgemässes Verfahren, welches die zweitgenannte Aufgabe löst, ist im Anspruch 9 angegeben. Ein weiteres Verfahren, welches die zweitgenannte Aufgabe löst, ist im Anspruch 10 angegeben. Die Ansprüche 11 bis 14 geben bevorzugte Ausführungen an.

Die erfindungsgemässen Stellvorrichtungen und Verfahren haben den Vorteil, dass die beiden Stellelemente bei der Schwenkbewegung um die vertikale bzw. horizontale Achse zusammen arbeiten. Somit können kleinere Stellelemente als bisher verwendet werden, was u.a. zu niedrigeren Herstellungskosten führt. Auch benötigen die erfindungsgemässen Stellvorrichtungen und Verfahren einen geringeren Platzbedarf als die bekannten Stellvorrichtungen und Verfahren. Insbesondere sind sie anwendbar, ohne den Einbaubereich der Scheinwerfer erhöhen zu müssen.

Die Erfindung wird im Folgenden anhand eines Ausführungsbeispiels unter Bezugnahme auf Figuren erläutert.
Fig. 1 zeigt schematisch eine bekannte Stellvorrichtung,
Fig. 2 zeigt schematisch die erfindungsgemässe Stellvorrichtung, bei welcher der Scheinwerfer um mindestens zwei Achsen schwenkbar ist,
Fig. 3 zeigt eine Darstellung eines Elektromotors, der in der Vorrichtung gemäss Fig. 2 als Stellelement verwendbar ist, und
Fig. 4 zeigt eine Steuerschaltung, mit welcher die beiden Stellelemente der Vorrichtung gemäss Fig. 2 ansteuerbar sind.

Fig. 2 zeigt eine erfindungsgemässe Stellvorrichtung zur gesteuerten Einstellung der Richtung eines Lichtbündels, welches von einem um mindestens zwei Achsen schwenkbaren Scheinwerfer eines Fahrzeuges ausgesendet wird. Die Stellvorrichtung gemäss Fig. 2 umfasst Stellelemente 21 und 22 und eine zu deren Steuerung dienende Steuerschaltung 51. Wie in Fig. 2 dargestellt, enthalten die beiden Stellelemente 21 und 22 je einen beweglichen Schaft 23 und 24. Das jeweilige eine Ende eines Schaftes 23 bzw. 24 ist mit einer Verbindungsstelle 25 bzw. 26 des Scheinwerfers 30 mechanisch verbindbar, z.B. in Form eines Gelenkes. Wie weiter unten erläutert wird, sind mit der Steuerschaltung 51 zur Steuerung der beiden Stellelemente 21 und 22 Steuersignale erzeugbar, die eine gleichzeitige Bewegung der beiden Schäfte 23 und 24 bewirken, so dass beide Stellelemente 21 und 22 gemeinsam eine Schwenkung des Scheinwerfers und damit des Lichtbündels um eine der beiden Achsen bewirken.

In Analogie zu der obigen Beschreibung ist die erfindungsgemässe Stellvorrichtung auch einsetzbar zur gesteuerten Einstellung der Richtung eines Lichtbündels, welches von einem Scheinwerfer ausgesendet wird, bei welchem eine Komponente des Scheinwerfers, welche die Richtung des Lichtbündels beeinflusst, um mindestens zwei Achsen schwenkbar ist. Diese strahlenbeeinflussende Komponente kann z.B. einen Reflektor, eine Blende, ein Linsensystem oder Prismen umfassen. In Analogie zu Fig. 2 ist das jeweilige eine Ende der beiden Schäfte mit einer Verbindungsstelle der strahlenbeeinflussenden Komponente des Scheinwerfers mechanisch verbindbar. Mit der Steuerschaltung zur Steuerung der beiden Stellelemente sind Steuersignale erzeugbar, die eine gleichzeitige Bewegung der beiden Schäfte bewirken, so dass beide Stellelemente gemeinsam eine Schwenkung der strahlenbeeinflussenden Komponente des Scheinwerfers und damit des Lichtbündels um eine der beiden Achsen bewirken.

Damit der Scheinwerfer 30 um mindestens zwei Achsen schwenkbar ist, ist dieser wie in Fig. 2 illustriert beispielsweise an einer Halterung 34 in Form eines Gelenkes beweglich gelagert, üblicherweise in einem Kugelgelenk. Analog ist eine um mindestens zwei Achsen schwenkbare strahlenbeeinflussende Komponente des Scheinwerfers an einer Halterung, z.B. in einem Kugelgelenk, beweglich gelagert.

Die Halterung 34 ist vorzugsweise etwa mittig zwischen den beiden Stellelementen 21 und 22 angeordnet, so dass sie und die beiden Verbindungsstellen 25 und 26 in den Eckpunkten eines im Wesentlichen gleichschenkligen Dreiecks angeordnet sind, wobei die die beiden Verbindungsstellen 25 und 26 verbindende Achse 35 im Wesentlichen entlang der Grundlinie des gleichschenkligen Dreiecks verläuft.

Wie in Fig. 2 dargestellt, verlaufen die beiden Achsen 32 und 33, um welche der Scheinwerfer 30 bzw. die strahlenbeeinflussende Komponente des Scheinwerfers 30 schwenkbar ist, durch die Halterung 34 im Wesentlichen entlang einer Horizontalen Y bzw. Vertikalen Z.

Die Achsen 32 und 33 bilden die Hauptschwenkachsen, da beim Fahren bevorzugterweise Schwenkungen des Lichtbündels entweder um die Horizontale Y oder Vertikale Z erfolgen sollen.

Wie in Fig. 2 dargestellt, verläuft die Achse 35, welche die beiden Verbindungsstellen 25 und 26 verbindet, im Wesentlichen entlang der Horizontalen Y. Somit ist sie im Wesentlichen parallel bzw. senkrecht auf den beiden Hauptschwenkachsen 32 und 33.

Bei einer Schwenkung um die Achse 32 resultiert eine Auf-Ab-Bewegung des Lichtbündels und somit ein Einstellen der Leuchtweite. Andererseits sind durch die Auf-Ab-Bewegung Nickbewegungen des Fahrzeuges so ausgleichbar, dass die Leuchtweite im Wesentlichen konstant bleibt, so dass z.B. die Gefahr, dass entgegenkommende Fahrer geblendet werden, reduziert wird.

Bei einer Schwenkung um die Achse 33 erfolgt eine Links-Rechts-Bewegung des Lichtbündels. Somit kann z.B. beim Fahren einer Kurve mit dem Fahrzeug das Lichtbündel entsprechend in Richtung der Kurve geschwenkt wird. Damit kann unter anderem die Fahrstrasse besser ausgeleuchtet werden, um die eigene Fahrsicherheit zu erhöhen.

Durch die in Fig. 2 dargestellte Anordnung der Verbindungsstellen 25 und 26 und der Halterung 34 wird erreicht, dass die Achsen, welche durch die Halterung 34 und durch jeweils eine der beiden Verbindungsstellen 25 bzw. 26 verlaufen, wesentlich von den beiden Hauptschwenkachsen 32 und 33 abweichen. Somit wird erreicht, dass bei Schwenkungen um die Hauptachsen 32 und 33 die von den Stellelementen aufzubringenden Stellkräfte auf beide Stellelemente 21 und 22 in etwa gleichmässig verteilt sind.

In einer weiteren Ausführungsform verläuft die Achse 35, welche die beiden Verbindungsstellen 25 und 26 verbindet, entlang der Vertikalen Z verlaufen, so dass die Halterung 34 seitlich angebracht ist und gegenüberliegend nach oben und unten versetzt die beiden Stellelemente 21 und 22.

Je nach den Platzverhältnissen im Einbaubereich der Scheinwerfer lässt sich die Anordnung der Stellelemente 21 und 22, der Verbindungsstellen 25 und 26 und der Halterung 34 entsprechend anpassen.

Wie dies in Fig. 2 durch Doppelpfeile 36 und 37 angedeutet ist, sind die beiden Schäfte 23 und 24 entlang ihrer Achsen bewegbar. Zur Schwenkung des Lichtbündels um eine der beiden Achsen 32 und 33 sind die beiden Schäfte 23 und 24 gleichzeitig mit im Wesentlichen gleichem Hub entweder in die gleiche Richtung oder in entgegengesetzten Richtungen bewegbar.

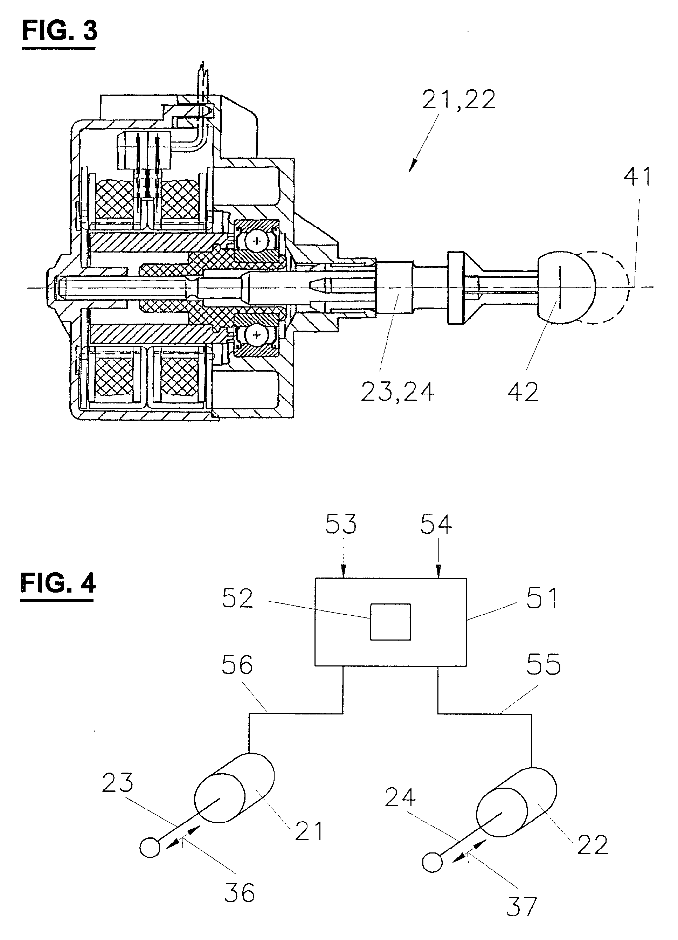

Fig. 3 zeigt einen Querschnitt eines Elektromotors, der in der Vorrichtung gemäss Fig. 2 als Stellelement 21 oder 22 verwendbar ist. Der Schaft 23 bzw. 24 ist axial entlang seiner Achse 41 bewegbar, so dass er eine translatorische Bewegung vollführen kann. An einem der beiden Enden ist ein Kugelkopf 42 angebracht, der zur mechanischen Verbindung mit dem Scheinwerfer 30 oder mit der strahlenbeeinflussenden Komponente des Scheinwerfers 30 dient.

Fig. 4 zeigt schematisch die Steuerschaltung 51, mit welcher die beiden Stellelemente 21 und 22 der Vorrichtung gemäss Fig. 2 ansteuerbar sind. Mit dieser Steuerschaltung 51 sind Steuersignale 55 und 56 erzeugbar, die eine gleichzeitige Bewegung der beiden Schäfte 23 und 24 bewirken. Diese Bewegung ist dabei so, dass die beiden Schäfte 23 und 24 gleichzeitig mit im Wesentlichen gleichem Hub entweder in die gleiche Richtung oder in entgegengesetzten Richtungen bewegt werden. Gemäss Fig. 2 erfolgt eine Auf-Ab-Bewegung des Lichtbündels, indem die Schäfte 23 und 24 gleichzeitig in die gleiche Richtung bewegt werden. Die Links-Rechts-Bewegung des Lichtbündels wird ermöglicht, indem die Schäfte 23 und 24 gleichzeitig in entgegengesetzten Richtungen bewegt werden. Eine entsprechende Funktionsweise der Stellvorrichtung ergibt sich je nach Anordnung der Halterung 34 und der beiden Verbindungsstellen 25 und 26 im Einbaubereich des Scheinwerfers.

Die Steuerschaltung 51 enthält elektronische Bauteile 52, z.B. einen Mikroprozessor, als Mittel, um Signale aufzunehmen und zu verarbeiten, welche Informationen über den Zustand des Fahrzeuges enthalten. In einer vorteilhaften Ausführungsform werden die Signale von einem oder mehreren Sensoren geliefert und enthalten Informationen über die Lage, Neigung, geographische Position, Fahrrichtung und/oder Lenkrichtung des Fahrzeuges. Entsprechend dieser Signale sind die beiden Stellelemente ansteuerbar, um eine gleichzeitige Bewegung der beiden Schäfte in gleichem Masse zu bewirken. In einer bevorzugten Ausführungsform enthalten die Signale ein Signal 53 für die Auf-Ab-Bewegung und ein Signal 54 für die Links-Rechts-Bewegung des Lichtbündels. Aus diesen Signalen 53 und 54 sind durch die Steuerschaltung Steuersignale 55 und 56 erzeugbar, welche durch die Stellelemente 21 und 22 empfangen werden und welche eine gleichgerichtete bzw. gegengerichtete Bewegung der beiden Schäfte 23 und 24 bewirken.

Mit der erfindungsgemässen Stellvorrichtung sind folgende Verfahren zur gesteuerten Einstellung der Richtung eines Lichtbündels, welches von einem Scheinwerfer eines Fahrzeuges ausgesendet wird, durchführbar.

Der Scheinwerfer 30 ist um mindestens zwei Achsen schwenkbar und seine Orientierung wird mittels zweier Stellelemente 21 und 22 geändert, die je einen beweglichen Schaft 23 und 24 enthalten. Dessen jeweiliges eine Ende ist mit einer Verbindungsstelle 25 bzw. 26 des Scheinwerfers 30 mechanisch verbindbar. Die beiden Stellelemente 21 und 22 werden mit einer Steuerschaltung 51 gesteuert, mit welcher Steuersignale erzeugt werden, die eine gleichzeitige Bewegung der beiden Schäfte 23 und 24 bewirken, so dass beide Stellelemente 21 und 22 gemeinsam eine Schwenkung des Scheinwerfers 30 und damit des Lichtbündels um eine der beiden Achsen bewirken.

Ebenso ist mit der erfindungsgemässen Stellvorrichtung ein Verfahren zur gesteuerten Einstellung der Richtung eines Lichtbündels durchführbar, bei dem eine strahlenbeeinflussende Komponente des Scheinwerfers um mindestens zwei Achsen schwenkbar ist. Die beweglichen Schäfte sind mit der strahlenbeeinflussenden Komponente mechanisch verbindbar und ihre Orientierung wird geändert, indem die beiden Stellelemente mit einer Steuerschaltung gesteuert werden, mit welcher Steuersignale erzeugt werden, die eine gleichzeitige Bewegung der beiden Schäfte bewirken, so dass beide Stellelemente gemeinsam eine Schwenkung der strahlenbeeinflussenden Komponente und damit des Lichtbündels um eine der beiden Achsen bewirken.

In einer bevorzugten Ausführungsform erfolgt die Änderung der Orientierung durch eine Schwenkung um eine Achse 32, die im Wesentlichen entlang der Horizontalen Y verläuft, oder durch eine Schwenkung um eine Achse 33, die im Wesentlichen entlang der Vertikalen Z verläuft.

Bei der Schwenkung um eine der beiden Achsen verbleibt die Achse 35, welche die beiden Verbindungsstellen 25 und 26 verbindet, im Wesentlichen in der Horizontalen Y oder in der Vertikalen Z.

Die Änderung der Orientierung des Lichtbündels erfolgt, indem die beiden Schäfte 23 und 24 entlang ihrer Achsen bewegt werden und diese Bewegungen gleichzeitig mit im Wesentlichen gleichem Hub entweder in die gleiche Richtung oder in entgegengesetzte Richtungen erfolgen.

In einer bevorzugten Ausführungsform sind die Halterung 34 und die beiden Verbindungsstellen 25 und 26 so angeordnet wie in Fig. 2 dargestellt, so dass eine Schwenkung des Lichtbündels um die durch die Halterung 34 gehende horizontale Achse 32 erfolgt, indem die beiden Schäfte 23 und 24 gleichzeitig entlang ihrer Achse in die gleiche Richtung bewegt werden. Bewegen sich hingegen die beiden Schäfte 23 und 24 gleichzeitig in entgegengesetzte Richtungen, so wird der Scheinwerfer 30 bzw. die strahlenbeeinflussende Komponente des Scheinwerfers um die durch Halterung 34 gehende vertikale Achse 33 geschwenkt.

Eine sinngemässe Funktionsweise der Einstellung ergibt sich bei einer weiteren Ausführungsform, bei welcher die die beiden Verbindungsstellen 25 und 26 verbindende Achse 35 z.B. im Wesentlichen entlang der Vertikalen Z verläuft: bewegen sich die beiden Schäfte 23 und 24 gleichzeitig axial entlang ihrer Achsen in die gleiche Richtung, so erfolgt eine Schwenkung um eine Achse, die im Wesentlichen parallel zur Achse 35 ist, welche die beiden Verbindungsstellen 25 und 26 verbindet; bewegen sich die beiden Schäfte 23 und 24 gleichzeitig in entgegengesetzten Richtungen, so erfolgt eine Schwenkung um eine Achse, die im Wesentlichen senkrecht zur Achse 35 ist.

Zur Schwenkung des Lichtbündels werden im Ansprechen auf ein Eingangssignal z.B. von einem Sensor Steuersignale von der Steuerschaltung 51 erzeugt, welche Informationen über den Zustand des Fahrzeuges enthalten. Durch diese Steuerung kann, z.B. aufgrund der momentanen Fahr- oder Lenkrichtung des Fahrzeuges, das vom Scheinwerfer erzeugte Lichtbündel entsprechend geschwenkt werden. Andere Informationen über den Zustand des Fahrzeuges, die zur Steuerung dienen können, sind seine Lage, Neigung und/oder, geographische Position.

Wie oben erläutert, enthält das Eingangssignal z.B. beim Fahren einer Kurve ein Signal für die Links-Rechts-Bewegung 54 des Lichtbündels und bei einer Nickbewegung des Fahrzeuges ein Signal für die Auf-Ab-Bewegung 55 des Lichtbündels. Die Signale bewirken eine gleichgerichtete bzw. gegengerichtete Bewegung der beiden Schäfte 23 und 24. Je nach Verlauf einer Fahrstrasse kann so die Orientierung des Lichtbündels permanent und gezielt geändert werden. Damit kann die Lichtverteilung auf der Fahrstrasse z.B. gemäss vorgegebenen Werten gesteuert werden.

Die Verwendung beider Stellelemente anstelle nur eines Stellelementes zur Schwenkung des Lichtbündels um eine Achse hat den Vorteil, dass die Verstellkraft doppelt so gross ist. Um eine Schwenkung zu erzeugen, reichen also weniger kräftige Stellelemente aus, was unter anderem zu einer kompakteren Bauweise und zu niedrigeren Herstellungskosten führt. Auch ist bei den erfindungsgemässen Stellvorrichtungen und Verfahren der Platzbedarf geringer gegenüber den bekannten Stellvorrichtungen und Verfahren.

Aus der vorangehenden Beschreibungen sind dem Fachmann zahlreiche Abwandlungen zugänglich, ohne den Schutzbereich der Erfindung zu verlassen, der durch die Ansprüche definiert ist. So wird die genaue Anordnung der Stellelemente 21 und 22 und Verbindungsstellen 25 und 26 im Allgemeinen von den Platzverhältnissen und Geometrien des Einbaureichs eines Scheinwerfers abhängen. In einer weiteren Ausführungsform wird die Steuerschaltung 51 dazu verwendet, gleichzeitig mehr als einen Scheinwerfer oder eine Komponente davon anzusteuern. So werden bei Fahrzeugen wie z.B. Kraftfahrzeugen üblicherweise mindestens zwei Scheinwerfer im Frontbereich zur Beleuchtung verwendet.

In einer weiteren Ausführungsform wird das sogenannte "Global Positioning System" dazu verwendet, Informationen über die Lage und geographische Position des Fahrzeuges zu erhalten, und daraus mittels der Steuerschaltung 51 Steuersignale zur entsprechenden Einstellung des Lichtbündels zu erzeugen. Es ist auch möglich, durch Einbezugnahme von Daten über die Geometrie der Fahrstrasse und die Fahrgeschwindigkeit des Fahrzeuges nebst seiner momentanen auch seine zukünftige Lage und geographische Position zu berechnen, und das Lichtbündel entsprechend vorausschauend zu ändern.

### Bezugszeichenliste

- 11: Stellelement
- 12: Reflektor
- 13: Horizontale Achse
- 14: Gelenk
- 15: Halterung
- 16: Stellelement
- 17: Vertikale Achse
- 21: Stellelement
- 22: Stellelement
- 23: Schaft
- 24: Schaft
- 25: Verbindungsstelle
- 26: Verbindungsstelle
- 30: Scheinwerfer
- 32: Horizontale Achse, um welche der Scheinwerfer bzw. eine Komponente davon schwenkbar ist
- 33: Vertikale Achse, um welche der Scheinwerfer bzw. eine Komponente davon schwenkbar ist
- 34: Halterung
- 35: Achse, welche Verbindungsstelle 25 und Verbindungsstelle 26 verbindet
- 36: Bewegungsrichtung von Schaft 23
- 37: Bewegungsrichtung von Schaft 24
- 41: Achse eines Schaftes
- 42: Kugelkopf
- 51: Steuerschaltung
- 52: Elektronische Bauteile
- 53: Signal
- 54: Signal
- 55: Steuersignal
- 56: Steuersignal
- X: Achse entlang einer Horizontalen
- Y: Achse entlang einer Horizontalen
- Z: Achse entlang der Vertikalen

## Patentansprüche

1. Stellvorrichtung zur gesteuerten Einstellung der Richtung eines Lichtbündels, welches von einem Scheinwerfer eines Fahrzeuges ausgesendet wird, welcher Scheinwerfer um mindestens zwei Achsen (32, 33) schwenkbar ist, **dadurch gekennzeichnet, dass** die Stellvorrichtung folgende Komponenten umfasst:
(a) ein erstes Stellelement (21), das einen ersten beweglichen Schaft (23) enthält, dessen eines Ende mit einer ersten Verbindungsstelle (25) des Scheinwerfers mechanisch verbindbar ist,
(b) ein zweites Stellelement (22), das einen zweiten beweglichen Schaft (24) enthält, dessen eines Ende mit einer zweiten Verbindungsstelle (26) des Scheinwerfers mechanisch verbindbar ist, und
(c) eine Steuerschaltung (51) zur Steuerung des ersten und des zweiten Stellelementes (21, 22), mit welcher Steuersignale erzeugbar sind, die eine gleichzeitige Bewegung des ersten und zweiten Schaftes (23, 24) bewirken, so dass beide Stellelemente (21, 22) gemeinsam eine Schwenkung des Scheinwerfers und damit des Lichtbündels um eine der beiden Achsen (32, 33) bewirken.

2. Stellvorrichtung gemäss Anspruch 1, **dadurch gekennzeichnet, dass** der Scheinwerfer an einer Halterung (34) beweglich gelagert ist und dass die Halterung (34) und die beiden Verbindungsstellen (25, 26) in den Eckpunkten eines im Wesentlichen gleichschenkligen Dreiecks angeordnet sind, wobei die die beiden Verbindungsstellen verbindende Achse (35) im Wesentlichen entlang der Grundlinie des gleichschenkligen Dreiecks verläuft.

3. Stellvorrichtung zur gesteuerten Einstellung der Richtung eines Lichtbündels, welches von einem Scheinwerfer eines Fahrzeuges ausgesendet wird, welcher Scheinwerfer eine Komponente enthält, welche die Richtung des Lichtbündels beeinflusst und welche um mindestens zwei Achsen (32, 33) schwenkbar ist, **dadurch gekennzeichnet, dass** die Stellvorrichtung folgende Komponenten umfasst:
(a) ein erstes Stellelement (21), das einen ersten beweglichen Schaft (23) enthält, dessen eines Ende mit einer ersten Verbindungsstelle (25) der Komponente des Scheinwerfers mechanisch verbindbar ist,
(b) ein zweites Stellelement (22), das einen zweiten beweglichen Schaft (24) enthält, dessen eines Ende mit einer zweiten Verbindungsstelle (26) der Komponente des Scheinwerfers mechanisch verbindbar ist, und
(c) eine Steuerschaltung (51) zur Steuerung des ersten und des zweiten Stellelementes (21, 22), mit welcher Steuersignale (54, 55) erzeugbar sind, die eine gleichzeitige Bewegung des ersten und zweiten Schaftes (23, 24) bewirken, so dass beide Stellelemente (21, 22) gemeinsam eine Schwenkung der Komponente und damit des Lichtbündels um eine der beiden Achsen (32, 33) bewirken.

4. Stellvorrichtung gemäss Anspruch 3, **dadurch gekennzeichnet, dass** die Komponente des Scheinwerfers an einer Halterung (34) beweglich gelagert ist und dass die Halterung (34) und die beiden Verbindungsstellen (25, 26) in den Eckpunkten eines im Wesentlichen gleichschenkligen Dreiecks angeordnet sind, wobei die die beiden Verbindungsstellen verbindende Achse im Wesentlichen entlang der Grundlinie des gleichschenkligen Dreiecks verläuft.

5. Stellvorrichtung nach einem der Ansprüche 1 bis 4, **dadurch gekennzeichnet, dass** eine der beiden Achsen (32, 33) im Wesentlichen entlang der Vertikalen (Z) verläuft und die andere Achse entlang einer Horizontalen (X, Y) verläuft.

6. Stellvorrichtung nach einem der Ansprüche 1 bis 5, **dadurch gekennzeichnet, dass** die Achse (35), welche die beiden Verbindungsstellen verbindet, im Wesentlichen entlang der Vertikalen (Z) oder entlang einer Horizontalen (X, Y) verläuft.

7. Stellvorrichtung nach einem der Ansprüche 1 bis 6, **dadurch gekennzeichnet,**
**dass** die beiden Schäfte (23, 24) entlang ihrer Achsen bewegbar sind, und
**dass** zur Schwenkung des Lichtbündels um eine der beiden Achsen (32, 33) die beiden Schäfte gleichzeitig entweder in die gleiche Richtung oder in entgegengesetzten Richtungen bewegbar sind.

8. Stellvorrichtung nach einem der Ansprüche 1 bis 7, **dadurch gekennzeichnet, dass** die Steuerschaltung Mittel (52) enthält, um wenigstens ein Signal (53, 54) aufzunehmen und zu verarbeiten, welches Informationen über den Zustand des Fahrzeuges enthält, insbesondere die Lage, Neigung, geographische Position, Fahrrichtung und/oder Lenkrichtung des Fahrzeuges, um die Orientierung des Lichtbündels bei Zustandsänderungen des Fahrzeuges verändern zu können.

9. Verfahren zur gesteuerten Einstellung der Richtung eines Lichtbündels, welches von einem Scheinwerfer eines Fahrzeuges ausgesendet wird, welcher Scheinwerfer um zwei Achsen (32, 33) schwenkbar ist, **dadurch gekennzeichnet,**
**dass** die Orientierung des Scheinwerfers mittels eines ersten und eines zweiten Stellelementes (21, 22) geändert wird, wobei das erste Stellelement (21) einen ersten beweglichen Schaft (23) enthält, dessen eines Ende mit einer ersten Verbindungsstelle (25) des Scheinwerfers mechanisch verbindbar ist, und das zweite Stellelement (22) einen zweiten beweglichen Schaft (24) enthält, dessen eines Ende mit einer zweiten Verbindungsstelle (26) des Scheinwerfers mechanisch verbindbar ist, und
**dass** dafür das erste und das zweite Stellelement (21, 22) mit einer Steuerschaltung (51) gesteuert werden, mit welcher Steuersignale erzeugt werden, die eine gleichzeitige Bewegung des ersten und zweiten Schaftes (23, 24) bewirken, so dass beide Stellelemente (21, 22) gemeinsam eine Schwenkung des Scheinwerfers und damit des Lichtbündels um eine der beiden Achsen (32, 33) bewirken.

10. Verfahren zur gesteuerten Einstellung der Richtung eines Lichtbündels, welches von einem Scheinwerfer eines Fahrzeuges ausgesendet wird, welcher Scheinwerfer eine Komponente enthält, welche die Richtung des Lichtbündels beeinflusst und welche um zwei Achsen (32, 33) schwenkbar ist, **dadurch gekennzeichnet,**
**dass** die Orientierung der Komponente mittels eines ersten und eines zweiten Stellelementes (21, 22) geändert wird, wobei das erste Stellelement (21) einen ersten beweglichen Schaft (23) enthält, dessen eines Ende mit einer ersten Verbindungsstelle (25) der Komponente des Scheinwerfers mechanisch verbindbar ist, und das zweite Stellelement (22) einen zweiten beweglichen Schaft (24) enthält, dessen eines Ende mit einer zweiten Verbindungsstelle (26) der Komponente des Scheinwerfers mechanisch verbindbar ist, und
**dass** dafür das erste und das zweite Stellelement (21, 22) mit einer Steuerschaltung (51) gesteuert werden, mit welcher Steuersignale erzeugt werden, die eine gleichzeitige Bewegung des ersten und zweiten Schaftes (23, 24) bewirken, so dass beide Stellelemente (21, 22) gemeinsam eine Schwenkung der Komponente und damit des Lichtbündels um eine der beiden Achsen (32, 33) bewirken.

11. Verfahren nach einem der Ansprüche 9 oder 10, **dadurch gekennzeichnet, dass** die Änderung der Orientierung durch eine Schwenkung um eine Achse (32) erfolgt, die im Wesentlichen entlang einer Horizontalen (X, Y) verläuft, oder durch eine Schwenkung um eine Achse (33), die im Wesentlichen entlang der Vertikalen (Z) verläuft.

12. Verfahren nach Anspruch 11, **dadurch gekennzeichnet, dass** bei der Schwenkung um eine der beiden Achsen (32, 33) die Achse (35), welche die beiden Verbindungsstellen (25, 26) verbindet, im Wesentlichen in der Vertikalen (Z) oder in einer Horizontalen (X, Y) verbleibt.

13. Verfahren nach einem der Ansprüche 9 bis 12, **dadurch gekennzeichnet, dass** die Änderung der Orientierung erfolgt, indem die beiden Schäfte (36, 37) entlang ihrer Achsen bewegt werden und diese Bewegungen gleichzeitig entweder in die gleiche Richtung oder in entgegengesetzte Richtungen erfolgen.

14. Verfahren nach einem der Ansprüche 9 bis 13, **dadurch gekennzeichnet, dass** im Ansprechen auf wenigstens ein Eingangssignal Steuersignale (54, 55) von der Steuerschaltung (51) erzeugt werden, welche Informationen über den Zustand des Fahrzeuges enthalten, insbesondere die Lage, Neigung, geographische Position, Fahrrichtung und/oder Lenkrichtung des Fahrzeuges, um die Orientierung des Lichtbündels bei Zustandsänderungen des Fahrzeuges zu verändern zu können.

15. Fahrzeugscheinwerfer mit einer Stellvorrichtung nach einem der Ansprüche 1 bis 8.
